# NEUE EUROPÄISCHE PATENTSCHRIFT

(11) **EP 0 741 370 B2**
(45) Veröffentlichungstag und Bekanntmachung des Hinweises auf die Entscheidung über den Einspruch: **14.11.2001**
(45) Hinweis auf die Patenterteilung: 19.08.1998
(21) Anmeldenummer: 95810302.0
(22) Anmeldetag: 05.05.1995
(51) Int. Cl.: G06K 19/18

(54) **Verfahren zum Aufbringen eines Sicherheitselementes auf ein Substrat**
Method for applying a security element on a substrate
Procédé pour appliquer un élément de sécurité sur un substrat

(43) Veröffentlichungstag der Anmeldung: 06.11.1996
(73) Patentinhaber: OVD Kinegram AG, 6301 Zug (CH)
(72) Erfinder: Tompkin, Wayne Robert, CH-5400 Ennetbaden (CH); Staub, René, CH-6330 Cham (CH)
(74) Vertreter: Müller, Hans-Jürgen, Dipl.-Ing.

(56) Entgegenhaltungen:
- EP-A- 0 401 466
- EP-A- 0 497 555
- EP-A- 0 648 613
- EP-B- 0 093 009
- EP-B- 0 433 575
- WO-A-83/00653
- CA-A- 1 257 992
- CH-A- 664 030
- CH-A- 678 835
- DE-A- 2 556 414
- DE-A- 4 333 546
- US-A- 4 728 377
- US-A- 4 911 302
- US-A- 5 319 476
- PATENT ABSTRACTS OF JAPAN vol. 15, no. 362 (M-1157) 12. September 1991 & JP-A-03 142 294 (OKI ELECTRIC IND. CO. LTD) 18. Juni 1991
- PATENT ABSTRACTS OF JAPAN vol. 14, no. 83 (M-0936) 16. Februar 1990 & JP-A-01 299 089 (DAINIPPON PRINTING CO. LTD) 1. Dezember 1989
- R.L. van Renesse, "Optical Document Security", 1994, Artech House Inc., Norwood, MA(US), Titelseite, Seiten 90-93,110-119,124-127,154,155,158-165,174-1 77
- H. Schütt et al,"Heißprägen- ein modernes Verfahren für das Dekorieren von Kunststoff-Teilen", Kunststoffe 72(1982)11, Seiten 701-707

## Beschreibung

Die Erfindung betrifft ein Verfahren zum Aufbringen und Individualisieren oder Personalisieren eines Sicherheitselementes auf ein Substrat oder Dokument gemäss dem Oberbegriff des Anspruchs 1.

Individualisierte, unveränderbare Sicherheitselemente dienen dem Schutz des damit versehenen Dokumentes gegen unerlaubtes Kopieren, gegen Fälschungen oder unerlaubte Veränderungen des Dokumentes.

Aus der europäischen Patentanmeldung EP 401 466 ist ein als Schichtverbund ausgebildetes Sicherheitselement zum Aufkleben auf ein Dokument bekannt. Der Schichtverbund weist Beugungsstrukturen auf, die zwischen eine Stabilisationsschicht und eine thermisch aktivierbare Kleberschicht eingebettet sind. Die Übertragung des Schichtverbundes auf das Dokument erfolgt, indem der Kleberschicht durch den Schichtverbund hindurch Wärme zugeführt wird, wobei die Stabilisationsschicht die Wärme gleichmässig verteilt und eine lokal übermässige Erhitzung der die Beugungsstrukturen tragenden Lackschichten verhindert. Der Schichtverbund dient wegen seiner durch die Beugungsstrukturen bewirkten optischen Effekte als Sicherheitselement.

Die EP 401 466 offenbart weiter die Ausbildung von gut und schlecht haftenden Stellen auf der Kleberschicht. Bei der thermischen Aktivierung bildet sich nur an den gut haftenden Stellen eine Haftverbindung zwischen dem Schichtverbund und dem Dokument aus. Beim Versuch der Ablösung vom Dokument wird einerseits das Sicherheitselement zerstört. Andererseits bleiben entsprechend dem Muster der Haftbrücken Teile des Sicherheitselementes auf dem Dokument zurück. Das zurückbleibende Muster kann ein sinnergebendes Muster sein und beispielsweise das Wort "VOID" darstellen.

Die PCT Anmeldung WO 93/16888 offenbart ein Druckverfahren zur Ausbildung der Kleberschicht eines Schichtverbundes mit gut und schlecht haftenden Stellen. Nach der Übertragung des Schichtverbundes auf das Dokument wird die Trägerfolie wieder abgezogen, wobei sich die Trägerfolie an den auf dem Dokument gut haftenden Stellen des Schichtverbundes vom Schichtverbund löst, während sich an den schlecht haftenden Stellen der ganze Schichtverbund vom Dokument löst. Die auf dem Dokument zurückbleibenden Teile des Schichtverbundes sind teilweise fein strukturierte Gebilde und können nicht vom Dokument entfernt werden, ohne sichtbare Spuren zu hinterlassen. Solche Teile können z.B. als feine Linien auf einem Foto vorhanden sein, so dass das Foto zwischen den das Sicherheitselement darstellenden Teilen gut sichtbar ist.

Aus dem japanischen Patent Abstract Vol. 15, No. 362 (M-1157) ist ein Verfahren bekannt, bei dem eine thermoplastische Folie als kratzfeste Schutzschicht auf eine Chipkarte aufgebracht wird. Um ein späteres Abschälen der Folie zu verhindern, wird die mit einer Kleberschicht versehene Oberfläche der Chipkarte an kritischen Stellen mittels eines die Folie durchdringenden Laserstrahles soweit erwärmt, dass die Chipkarte, die Kleberschicht und die Folie miteinander verschweissen.

Ferner ist es bekannt ("Heißprägen -ein modernes Verfahren für das Dekorieren von Kunststoff-Teilen" in Kunststoffe 72 (1982) 11 Seiten 701 bis 707 und ICI-Firmendruckschrift "Melinex Polyesterfilm: Metalizing 1986, Seiten 5, 6 und 8), eine Prägefolie bestehend aus einer Trägerfolie, einer Trennschicht, einem Schutzlack, einer als Dekor wirkenden Metallisierung sowie einer Klebeschicht durch einen heißen Prägestempel unter relativ hohem Druck soweit zu erhitzen, daß die erhitzten Flächen von nicht erhitzten Teilen der Schichten ge-wissermaßen ausgestanzt und mittels der erwärmten Klebeschicht an eine Kunststoffunterlage angeklebt werden, die jedenfalls oberflächlich plastifiziert wurde. Bei diesem für andere Zwecke des Dekorierens von Kunststoffartikeln, wie Tuben, Dosen, Flaschen oder dergleichen, dienenden Heißprägen ist die Anwendung eines relativ hohen Drucks und ausreichender Erhitzung erforderlich, was bei Sicherheitselementen, die optische Beugungsstruktur oder Interferenzeffekte aufweisen, ohne Beeinträchtigung dieser Sicherheitselemente nicht ohne weiteres möglich ist.

Schließlich ist es bekannt (DE-A-2 556 414 und US-A-4 911 302) Wärme- oder Laserstrahlen zum Bedrucken eines Trägers, der mit einem Farbband versehen ist, und zum Verdampfen von Druckfarbe zu verwenden.

Der Erfindung liegt die Aufgabe zugrunde, das Verfahren der eingangs genannten Gattung dahingehend zu verbessern, daß auch sehr fein strukturierte Muster des Sicherheitselements einfach, zuverlässig und bei Bedarf auch registergenau auf dem Substrat herstellbar sind, was auch das Individualisieren und/oder Personalisieren von Dokumenten erlaubt.

Die Erfindung ist in den Patentansprüchen 1-3 gekennzeichnet und in Unteransprüchen sind weitere Verbesserungen beansprucht.

Nachfolgend werden Ausführungsbeispiele der Erfindung anhand der Zeichnung näher erläutert.

Es zeigen:
- Fig. 1: einen auf ein Substrat geklebten Schichtverbund im Querschnitt,
- Fig. 2: eine Einrichtung zum Aufkleben des Schichtverbundes auf das Substrat,
- Fig. 3: eine zweite Einrichtung zum Aufkleben des Schichtverbundes auf das Substrat,
- Fig. 4: eine dritte Einrichtung zum Aufkleben des Schichtverbundes auf das Substrat,
- Fig. 5: einen Ausweis mit Sicherheitselementen,
- Fig. 6: eine Ziffer in Mikroschrift,
- Fig. 7: einen Check,
- Fig. 8, 9: eine Banknote und
- Fig. 10: einen weiteren Schichtverbund.

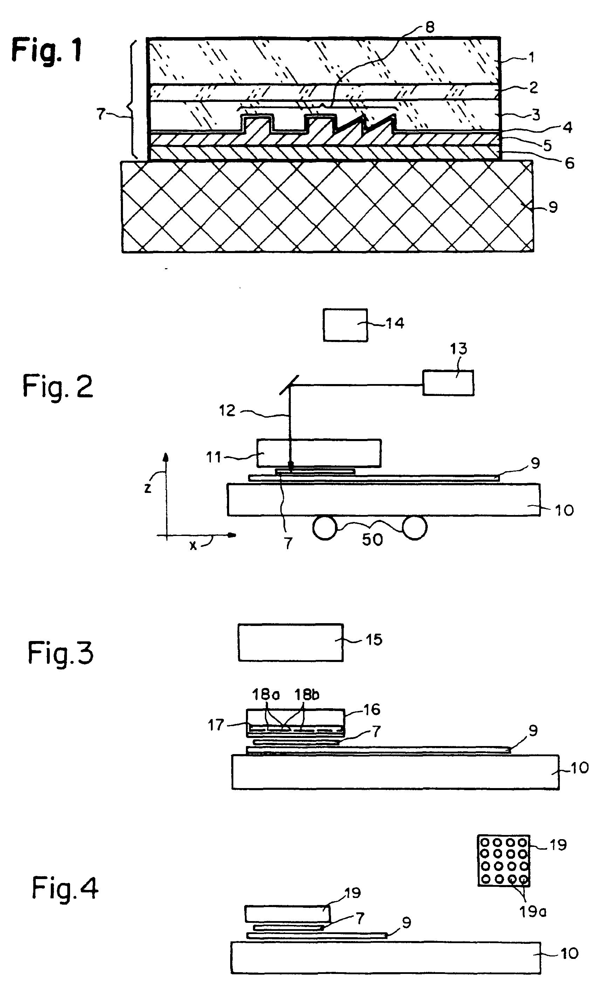

In der Figur 1 bedeutet 1 eine Trägerschicht, auf der in der angegebenen Reihenfolge eine Zwischenschicht 2, eine erste Lackschicht 3, eine reflektierende Reflexionsschicht 4, eine zweite Lackschicht 5 und eine Kleberschicht 6 aufgebracht sind. Die Schichten 1 bis 6 bilden einen Schichtverbund 7. Zwischen den Lackschichten 3 und 5 sind optische Beugungsstrukturen 8 eingebettet, z. B. Gitter, Hologramme, oder Beugungsstrukturen, wie sie aus der europäischen Patentschrift EP 105 099 bekannt sind, usw., welche durch die Lackschicht 3 hindurch auftreffendes Licht beugen und mindestens teilweise reflektieren. Der Schichtverbund 7 wird mittels eines später näher erläuterten Verfahrens an vorbestimmten Stellen mit einem Substrat 9 verklebt, wobei die Kleberschicht 6 auf dem Substrat 9 aufliegt.

Die Beugungstrukturen 8 sind mikroskopisch feine Reliefstrukturen, deren geometrische Parameter Linienabstand, Orientierung und Profilform örtlich in einer vorbestimmten Art und Weise derart variieren, dass sie bei Betrachtung und Bewegung des Substrats 9 unter normalen Beleuchtungsverhältnissen auffällige wechselnde beugungsoptische Effekte hervorbringen, wie z. B. unterschiedliche Farbeffekte oder Wechsel zwischen hell und dunkel. Ein weiterer optischer Effekt kann darin bestehen, dass benachbarte Flächenelemente in unterschiedlicher Helligkeit oder unterschiedlicher Farbe sichtbar sind, wobei beim Drehen oder Kippen des Substrats 9 die relative Helligkeit oder Farbe der Flächenelemente ändert. Die Beugungsstrukturen 8 können insbesondere die wechselnden optischen Effekte erzeugen, wie sie von Hologrammen oder von Optical Variable Devices, wie sie beispielsweise in der europäischen Patentschrift EP 375 833 beschrieben sind, bekannt sind. Die optischen Effekte der Beugungsstrukturen 8 stellen ein visuell einfach überprüfbares Merkmal dar.

Für die Trägerschicht 1 ist beispielsweise eine Folie aus Polyester sehr geeignet, da sich Polyesterfolien durch hohe Zugfestigkeit und hohe Temperaturbeständigkeit auszeichnen. Solche Folien sind auf Rollen in verschiedener Dicke handelsüblich, so dass mit Vorteil, wie weiter unten ausgeführt, mittels einer hier nicht gezeigten Umrollanlage auf einer Seite der Trägerschicht 1 der Schichtverbund 7 aufgebaut wird. Vorteilhaft weist die Trägerschicht 1 eine Dicke von wenigstens 6 Mikrometer auf, damit sie genügend reissfest ist. Bevorzugt ist eine Dicke von 20 µm. Bei bestimmten Anwendungen erreicht die Dicke jedoch ohne weiteres 50 µm. Die Trägerschicht 1 und, falls vorhanden, die Zwischenschicht 2 bilden eine Trägerfolie.

Falls es erforderlich ist, dass sich die Trägerschicht 1 und die Zwischenschicht 2 in einem späteren Prozessschritt leicht von der Lackschicht 3 lösen, ist die Zwischenschicht 2 beispielsweise eine ganzflächig auf der Trägerschicht 1 aufgebrachte Wachsschicht mit einer Auftragsdicke von vorzugsweise 0.1 Mikrometern. Falls die Trägerschicht 1 und die Zwischenschicht 2 später nicht vom Rest des Schichtverbundes 7 getrennt werden sollen, dient ein Haftvermittler (Primer) mit einer Auftragsdicke im Mikrometerbereich, vorzugsweise im Bereich von 0.8 bis 2 Mikrometern, als Zwischenschicht 2. Der Haftvermittler bewirkt ein hohes Haftvermögen zwischen der Trägerschicht 1 und der nachfolgenden Lackschicht 3. Als Haftvermittler dient vorteilhaft ein Lack auf der Basis von Polyurethan, damit die Zwischenschicht 2 gegen Licht, vorallem gegen ultraviolettes Licht, und gegen Lösungsmittel beständig ist.

Im letzteren Fall kann die Lackschicht 3 auch direkt auf die Trägerschicht 1 aufgetragen sein, falls das Haftvermögen der Lackschicht 3 auf der Trägerschicht 1 genügt. Vorteilhaft kann das Haftvermögen mittels einer Vorbehandlung der Trägerschicht 1, z. B. in einer Korona oder Plasmaentladung, erhöht werden. Eine Grenzschicht zwischen der Lackschicht 3 und der Trägerschicht 1 bzw. eine durch die Vorbehandlung veränderte Oberflächenschicht der Folie übernimmt in diesen Beispielen die Funktion der Zwischenschicht 2.

Auch im ersten Fall kann die Lackschicht 3 direkt auf die Trägerschicht 1 aufgetragen sein, falls das Haftvermögen der Lackschicht 3 auf der Trägerschicht 1 so abgestimmt ist, dass nach dem Verbinden des Schichtverbundes 7 mit dem Substrat 9 die Trägerschicht 1 an denjenigen Stellen des Schichtverbundes 7, die auf dem Substrat 9 haften, problemlos von der Lackschicht 3 getrennt werden kann und dass die Trägerschicht 1 an denjenigen Stellen des Schichtverbundes 7, die nicht auf dem Substrat 9 haften, die Schichten 3, 4, 5, 6 des Schichtverbundes 7 mitzieht, wobei die Schichten 3, 4, 5, 6 entlang der Grenze zwischen den haftenden und den nicht haftenden Stellen des Schichtverbundes 7 reissen.

Vorteilhaft sind für die Trägerschicht 1 gegebenenfalls Folien verwendbar, die bereits beim Lieferanten mit der Zwischenschicht 2 überzogen wurden.

Die erste Lackschicht 3 ist vorteilhaft in mindestens einem Arbeitsgang aufgetragen und weist typisch eine Schichtdicke zwischen 0.5 und 3.0 Mikrometer, vorzugsweise 1.5 Mikrometer, auf.

Die Beugungsstrukturen 8 werden beispielsweise mittels einer geheizten Prägematrize als mikroskopisch feine Reliefstrukturen in die Lackschicht 3 eingeprägt, wobei die Lackschicht 3 in diesem Fall aus thermoplastischem Werkstoff besteht. Ein solches Prägeverfahren ist z.B. aus der schweizerischen Patentschrift 661 683 bekannt. Bei einem weiteren Verfahren, wie es aus den US-amerikanischen Patentschriften 4 758 296 und 4 840 757 bekannt ist, werden die Beugungsstrukturen 8 durch Abformen in die Lackschicht 3 eingebracht, wobei die Lackschicht 3 aus UV-härtbarem Lack besteht.

Anschliessend wird die Reflexionschicht 4 auf die Lackschicht 3 aufgebracht, die mit Vorteil mittels einer Koronaentladung vorbehandelt ist, um eine gute Haftung der Reflexionsschicht 4 auf der Lackschicht 3 zu bewirken. Vorzugsweise ist als Reflexionsschicht 4 ein Metall aufgedampft, beispielsweise Aluminium, das kostengünstig ist und sichtbares sowie infrarotes Licht schon in dünnen Schichten gut reflektiert. Vorteilhaft eignet sich auch ein Dielektrikum als Reflexionsschicht 4, mit einem Brechungsindex, der möglicht stark von den benachbarten Schichten 3 und 5 abweicht, so dass die Beugungsstrukturen 8 teilweise transparent sind und darunter liegende Materialien, z. B. ein Bild, nicht vollständig verdecken.

Es ist auch möglich, die Beugungsstruktur 8 in die Lackschicht 3 einzuprägen, nachdem die Reflexionsschicht 4 aufgebracht wurde.

Das Relief der Beugungsstrukturen 8 weist eine typische Profilhöhe auf, die im Bereich von etwa 0.1 bis 1.5 Mikrometer liegt, während der Gitterabstand der Beugungsstrukturen 8 etwa 0.1 bis 10 Mikrometer beträgt. Ein Auftrag der zweiten Lackschicht 5 von etwa 0.15 bis 1.5 Mikrometer Dicke (z. B. 1 Mikrometer) ebnet das Relief völlig ein. Mit Vorteil wird für beide Lackschichten 3 und 5 das gleiche Material verwendet, beispielsweise ein thermoplastischer Acrylpolymerlack. Die zweite Lackschicht 5 dient vorwiegend als Haftvermittler zwischen der Reflexionsschicht 4 und der Kleberschicht 6. Auf sie kann gegebenenfalls verzichtet werden.

Der Acrylpolymerlack der Lackschicht 3 kann so eingefärbt werden, dass sie wenigstens in einem vorbestimmten Teil des Lichtspektrums transparent ist. Die Beugungsstruktur 8 bleibt in einem vorbestimmten Wellenlängenbereich maschinell oder visuell auslesbar. Ist beispielsweise der Farbstoff nur für infrarotes Licht durchlässig, ist die Beugungsstruktur 8 dem unbewaffneten Auge verborgen und nur mittels eines hier nicht gezeigten Lesegerätes erkennbar, das die Anwesenheit der Beugungsstruktur 8 festzustellen vermag.

Die abschliessend aufgebrachte Kleberschicht 6 von typisch weniger als 6 Mikrometer Dicke ermöglicht das Aufkleben des Schichtverbundes 7 auf das Substrat 9. Die Schichtdicke der Kleberschicht 6 ist vorteilhaft der Oberflächenbeschaffenheit des Substrates 9 angepasst. Bei glatten Substraten 9, wie z. B. bei Photopapieren, reichen 3 Mikrometer Dicke der Kleberschicht 6 aus, während die Kleberschicht 6 bei einem rauhen Substrat 9 mit Vorteil eine Dicke von 6 Mikrometern oder mehr aufweist. Bei einem Papier mit einer normalen Oberflächenstruktur beispielsweise beträgt die Dicke der Kleberschicht 6 etwa 5 Mikrometer.

Für die Kleberschicht 6 sind mit Wärme aktivierbare Heisskleber vorgesehen, z. B. auf der Basis von Polymethylmethacrylat, die beim Erwärmen ab etwa 80°C ihre Klebkraft entwickeln. Der Schichtverbund 7 kann jedoch erst bei einer Temperatur des Heissklebers von mehr als 170°C wieder vom Substrat 9 gelöst werden, ohne dass im Schichtverbund 7 zu grosse, die Schichten 3 bis 5 zerstörende Zugkräfte auftreten.

Der fertiggestellte Schichtverbund 7 verlässt die Umrollanlage beispielsweise in Form einer Rolle, die graphische Kompositionen aus Beugungsstrukturen 8 aufweist, welche optische Effekte der oben genannten Art bewirken.

Die Fig. 2 zeigt in nichtmassstäblicher Zeichnung in der xz-Ebene eine Einrichtung zum Aufkleben des Schichtverbundes 7 auf das Substrat 9. Das Substrat 9 liegt in einer dazu senkrechten xy-Ebene auf einer ebenen Platte 10 auf. Mittels einer zweiten Platte 11 wird der Schichtverbund 7 gegen das Substrat 9 und die Platte 10 gepresst, so dass der Schichtverbund 7 in direktem Kontakt gleichmässig auf dem Substrat 9 aufliegt. Der von einer Steuereinrichtung, z.B. einem Computer, gesteuerte Lichtstrahl 12 einer Laserlichtquelle 13 fällt durch die für ihn durchsichtige Platte 11 hindurch auf den Schichtverbund 7 und bewirkt eine lokale Erwärmung des Schichtverbundes 7 an der beleuchteten Stelle. Die Einrichtung umfasst fakultativ ein System 14 zur Erkennung der xy-Lage des Substrates 9, damit die Position des Laserstrahles 12 exakt auf die xy-Lage des Substrates 9 ausrichtbar ist. Auf diese Weise ist ein registergenaues Anbringen des Sicherheitselementes auf dem Substrat 9 möglich. Die Laserlichtquelle 13 umfasst einen Laser wie auch ein zur Strahlführung und Strahlfokussierung notwendiges optisches System.

Das Erkennungssystem 14 ist mit der Steuereinrichtung verbunden, die zur Führung und Steuerung des Laserstrahles 12 vorhanden ist. Es kann auf verschiedenen Prinzipien beruhen. Beispiele sind die Bilderkennung von auf das Substrat 9 aufgedruckten grafischen Elementen, die Erkennung des Randes des Substrates 9 oder die Erkennung von auf dem Substrat 9 vorhandenen Markierungen, beispielsweise einem bei Banknoten vorhandenen Metallfaden.

Das Erkennungssystem 14 kann auch dazu eingerichtet sein, die genaue Lage von auf dem Schichtverbund 7 vorhandenen Teilflächen, die mit Beugungsstrukturen 8 versehene Elemente darstellen, zu ermitteln, so dass ausgewählte, genau umrissene Elemente des Schichtverbundes 7 auf das Substrat 9 übertragbar sind.

Ist das Erkennungssystem 14 eingerichtet, sowohl die xy-Lage des Substrates 9 wie die xy-Lage des Schichtverbundes 7 zu ermitteln und ist weiter ein Positionierungssystem 50 vorhanden, mit dem der Schichtverbund 7 und das Substrat 9 gegenseitig in ihrer xy-Lage ausrichtbar sind, dann sind einzelne Elemente des Schichtverbundes 7 registerhaltig auf das Substrat 9 übertragbar.

Anstelle der Platten 10 und 11 können auch Zylinder vorgesehen sein. Dabei entsteht nur auf einer lokal begrenzten Fläche ein direkter Kontakt zwischen der Kleberschicht 6 und dem Substrat 9. Zylinder eignen sich besonders in einer Umrollanlage zur Verklebung von Substraten 9 und Schichtverbunden 7, die als Bänder auf Rollen aufgewickelt sind. Die gegenseitige Positionierung von Substrat 9 und Schichtverbund 7 in der x-Richtung ist dann einfach, indem die entsprechenden Rollen der Umrollanlage soweit gedreht werden, bis die Registerhaltigkeit der beiden Bänder erreicht ist. Die Positionierung in der y-Richtung kann entweder durch eine Verschiebung des Substrates 9 oder durch eine Verschiebung wenigstens einer der Rollen der Umrollanlage erfolgen. Bevorzugt erfolgt die Positionierung in y-Richtung durch Verschiebung einer einzigen Rolle der Umrollanlage, da die Trägheit des Folienbandes sehr gering ist. Die Verschiebung einer einzigen Rolle genügt, da bei korrekter Grundeinstellung der Anlage nur kleine Verschiebungen nötig sind, die das Folienband nicht verziehen.

Die optischen Eigenschaften der Reflexionsschicht 4 (Fig. 1) des Schichtverbundes 7 bestimmen, ob entweder der Laserstrahl 12 die Reflexionsschicht 4 durchdringen und die darunterliegenden Schichten 5, 6 (Fig. 1) direkt erwärmen kann oder ob der Laserstrahl 12 in der Reflexionsschicht 4 wenigstens teilweise absorbiert wird und die Reflexionsschicht 4 erwärmt, so dass die Kleberschicht 6 erst infolge der Wärmeleitung von der Reflexionsschicht 4 in die Kleberschicht 6 erwärmt wird. Als weitere Möglichkeit ist es denkbar, für die Lackschicht 3 (Fig. 1) einen Lack vorzusehen, der im Bereich der Wellenlänge des Laserlichtes eine hohe Absorption aufweist, so dass der Laserstrahl 12 vorwiegend die Lackschicht 3 erwärmt. Da die Lackschicht 3, die Reflexionsschicht 4 und die Kleberschicht 6 sehr dünn sind, ist der Anteil der in die Kleberschicht 6 gelangenden Wärme vergleichsweise hoch, so dass die Kleberschicht 6 auf sehr kleinen Flächen in der Grössenordnung von 10⁻¹⁰ m² lokal auf die erforderliche Aktivierungstemperatur erhitzbar ist.

Die thermischen Eigenschaften der Lackschichten 3, 5 (Fig. 1), der Reflexionsschicht 4 und der Kleberschicht 6 sind derart aufeinander abgestimmt, dass die zur Aktivierung der Kleberschicht 6 nötige Temperatur unterhalb der Temperatur liegt, bei der die Beugungsstrukturen 8 (Fig. 1) irreversibel zerstört werden. Die Leistungsdichte des Laserstrahles 12 und die örtliche Belichtungszeit des Schichtverbundes 7 sind nun ebenfalls so vorbestimmt, dass einerseits die Kleberschicht 6 so stark erwärmt wird, dass sie nach dem Erkalten eine hohe Haftung zwischen der belichteten Stelle des Schichtverbundes 7 und dem Substrat 9 bewirkt, und dass andererseits die Beugungsstrukturen 8 durch die Erwärmung nicht beschädigt oder zerstört werden. Die Aktivierungstemperatur der Kleberschicht 6 beträgt z. B. 80°C, während die Beugungsstrukturen 8 erst bei Temperaturen zwischen 150 und 160°C zerstört werden. Die auf diese Temperaturen abgestimmten Heisskleber der Kleberschicht 6 verbinden sich innig mit dem Substrat 9 und weisen nach dem Erkalten eine so grosse Haftkraft auf, dass bei einem Ablöseversuch z. B. ein papierenes Substrat 9 beschädigt wird. Bei einem solchen Ablöseversuch ist dann auch die Wahrscheinlichkeit gross, dass die Beugungsstrukturen 8 des Schichtverbundes 7 oder der Schichtaufbau oder die Integrität des Musters beschädigt werden. Bevorzugt ist weiter die Verwendung eines Lacks für die Lackschichten 3, 5, bei dem die in die Lackschichten 3, 5 eingeprägten Beugungsstrukturen 8 schon bei Temperaturen zwischen 150 und 160°C thermisch irreversibel zerstört werden, so dass ein Ablösen des Schichtverbundes 7 bei 170°C nutzlos ist. Liegen die Temperaturen beim Ablöseversuch etwas unterhalb von 170°C, zerstören Zugkräfte die weichen Schichten 3 bis 5.

Die Fig. 3 zeigt eine weitere Einrichtung zum Aufkleben des Schichtverbundes 7 (Fig. 1) auf das Substrat 9. Die Einrichtung weist anstelle der Laserlichtquelle 13 eine zur Erwärmung dienende Lichtquelle 15 und eine Vorrichtung 16 zur Maskierung des von der Lichtquelle 15 abgegebenen Lichtes auf. Für die Maskierung sind Masken 17 aller Art verwendbar, wobei die Maske 17 aus für das Licht der Lichtquelle 15 durchsichtigen und undurchsichtigen Stellen 18a bzw. 18b besteht. Als Maske 17 kann z.B. eine mit einem undurchsichtigen Material teilweise beschichtete Glasplatte oder Folie dienen. Die Maske 17 kann in unmittelbarer Nähe des Schichtverbundes 7 angeordnet sein oder mittels eines nicht dargestellten optischen Systems auf die Ebene des Schichtverbundes 7 abgebildet werden. Es ist weiter möglich, als Maske 17 einen räumlichen Lichtmodulator (SLM spatial light modulator), z.B. ein LCD-Flüssigkristall-Display, zu verwenden, der eine Matrix aus adressierbaren Pixeln enthält. Dabei ist jedes Pixel entsprechend der Ansteuerung durchsichtig oder undurchsichtig. Mit einer solchen Einrichtung sind viele Flächenteile des Schichtverbundes 7 gleichzeitig auf dem Substrat 9 erwärm- und festklebbar.

Eine dritte Einrichtung ist in der Fig. 4 dargestellt. Als Wärmelichtquelle dient ein adressierbares, ein- oder zweidimensionales Array 19 aus Laser- oder Leuchtdioden 19a, die beispielsweise in einem gegenseitigen Abstand von 0.1 mm angeordnet sind.

Anstelle der Verwendung der in der Fig. 2 dargestellten Platte 11 können zur Erzeugung eines gleichmässigen direkten Kontaktes zwischen der Kleberschicht 6 des Schichtverbundes 7 und dem Substrat 9 elektrostatische Mittel vorgesehen sein. Möglich wäre auch die Erzeugung eines Luftstromes zur Erzielung des notwendigen Flächenkontaktes zwischen den zu verklebenden Gegenständen 7 und 9. Das Array 19 (Fig. 4) kann auch in direkten Kontakt mit dem Schichtverbund 7 gebracht werden, so dass einerseits ein gleichmässiger Flächenkontakt zwischen der Kleberschicht 6 und dem Substrat 9 ausgebildet ist und andererseits eine sehr hohe optische Auflösung von typisch 300 dpi des durch die einzelnen Laserdioden 19a auf das Substrat 9 zu übertragenden, pixelorientierten Musters des Schichtverbundes 7 gewährleistet ist. Durch eine optische Abbildung des Arrays 19 auf die Ebene des Schichtverbundes 7 ist sogar eine noch höhere Auflösung erreichbar.

Es ist natürlich auch möglich, Teile des Schichtverbundes 7 mit einer Einrichtung nach der Fig. 2 und andere Teile des Schichtverbundes mit einer Einrichtung nach der Fig. 3 oder Fig. 4 auf dem Substrat 9 festzukleben. Die Wahl der Einrichtung hängt dabei von der zu erreichenden Stückzahl der mit dem Schichtverbund 7 zu versehenden Substrate 9 ab. Die Verwendung einer flächenhaft leuchtenden Lichtquelle 15 (Fig. 3) und von Masken 17 anstelle des geführten Laserstrahles 12 (Fig. 2) erlaubt höhere Durchsatzraten, die Verwendung des Laserstrahles 12 bringt andererseits bei kleinen Stückzahlen den Vorteil der grösseren Flexibilität. Die beiden Vorteile der hohen Durchsatzrate und der grossen Flexibilität sind kombiniert bei räumlichen Lichtmodulatoren wie bei Arrays mit Laser- bzw. Leuchtdioden und konmen insbesondere bei der Massenfertigung von Dokumenten wie z.B. Banknoten zum Tragen.

Bei einer ersten Form der Anwendung wird aus dem Schichtverbund 7 gemass der Figur 1 eine Teilfläche, die z. B. eine in sich abgeschlossene vorbestimmte Komposition aus den Beugungsstrukturen 8 enthält, als eine Marke ausgestanzt oder ausgeschnitten. Zum Verbinden mit dem Substrat 9 wird die Marke auf dem Substrat 9 angeordnet. Anschliessend wird mittels einer der vorgängig beschriebenen Einrichtungen die Kleberschicht 6 an vorbestimmten Stellen erweicht und mit dem Substrat 9 verklebt. Nach dem Erkalten und Erstarren des Heissklebers ist die Marke lokal in einem vordefinierten Muster fest mit dem Substrat 9 verbunden.

Beispielsweise weist die Marke eine Kreisform von 2 cm Durchmesser auf und ist typisch 25 Mikrometer dick. Die Marken können auch in anderen Grössen ausgeschnitten werden sowie ovale, rechteckige oder andere Formen der Berandung aufweisen. Ihre Form und ihre Abmessungen sind z. B. durch die graphische Komposition der Beugungsstrukturen 8 vorbestimmt.

Als Substrate 9 eignen sich beispielsweise Papiere oder Kunststoffe mit unterschiedlicher Oberflächenbeschaffenheit, wie sie bei Photopapieren, Ausweisen, Dokumenten, Wertpapieren, Banknoten, Checks, usw. auftritt.

Bei einer zweiten Form der Anwendung wird der Schichtverbund 7 mit dem Substrat 9, gegebenenfalls registergenau, in Kontakt gebracht und ebenfalls mittels einer der vorgängig beschriebenen Einrichtungen mit dem Substrat 9 verklebt. Nach dem Erkalten der Kleberschicht 6 wird in einem nächsten Arbeitsgang die Trägerfolie 1, 2 abgezogen. Dabei löst sich die Zwischenschicht 2 von der Lackschicht 3 an denjenigen Stellen des Schichtverbundes 7, die vorgängig genügend erwärmt wurden und somit auf dem Substrat 9 haften. An den auf dem Substrat 9 nicht haftenden Stellen der Kleberschicht 6 löst sich die Zwischenschicht 2 nicht von der Lackschicht 3 und die Schichten 3, 4, 5, 6 reissen entlang der Grenze zwischen den haftenden und den nicht haftenden Stellen, so dass die Schichten 3, 4, 5, 6 an den haftenden Stellen des Schichtverbundes 7 auf dem Substrat 9 zurückbleiben.

Bei Bedarf kann das Substrat 9 anschliessend mit einer transparenten Schutzschicht überzogen werden, um die auf dem Substrat 9 lokal zurückgebliebenen Schichten 3, 4, 5, 6 des Schichtverbundes 7 gegen mechanischen Abrieb oder Veränderung zu schützen.

Die Verwendung eines geführten Laserstrahles 12 (Fig. 2) ermöglicht die Ausbildung von äusserst feinen Linien, die typisch einige zehn Mikrometer, z.B. 60 Mikrometer, breit sind, die im Extremfall jedoch auch nur wenige Mikrometer, z.B. 5 Mikrometer, breit sein können. Ein derartig erzeugtes Linienmuster ist in seiner Feinheit vergleichbar mit einem in Tiefdruck erzeugten. Das aus Beugungsstrukturen 8 (Fig. 1) gebildete Linienmuster reflektiert entsprechend deren Ausgestaltung auftreffendes Licht in einen vorbestimmten Raumwinkelbereich zurück. Wegen der grossen Intensität des gebeugten Lichtes sind auch feine Muster, z.B. in der Form feiner Linien, oder eine Anordnung von kleinen Flächenelementen ohne Hilfsmittel erkennbar. Andererseits stellen derartig feine Objekte sehr fragile Gebilde dar, die bei jedem Versuch der Ablösung vom Substrat 9 zerstört werden. Auch eine Anordnung von einzelnen Flächenelementen, deren Abmessungen typisch im Bereich von 10 bis 100 Mikrometern liegen, ist nicht ohne erkennbare Veränderung vom Substrat 9 entfern- und wieder aufsetzbar.

Die Verwendung des geführten Laserstrahles 12 ermöglicht weiter ein registergenaues Aufbringen des Schichtverbundes 7 auf das Substrat 9 in zweierlei Hinsicht. Zum einen ist es möglich, mittels des Erkennungssystems 14 (Fig. 2) die Lage von beispielsweise auf dem Substrat 9 aufgedruckten Mustern mit hoher Genauigkeit festzustellen und anschliessend den Laserstrahl 12 entsprechend der Lage dieser Muster zu führen, so dass nach dem Abziehen der Trägerfolie auf dem Substrat 9 verbleibende Teile des Schichtverbundes 7 registergenau auf die Muster ausgerichtet sind. Beispielsweise ist es denkbar, eine Guilloche auf ein Dokument aufzubringen, von der einzelne Linien gedruckt und einzelne Linien als Schichtverbund 7 mit Beugungsstrukturen 8 aufgeklebt sind. Ein weitere Möglichkeit besteht darin, Teile eines grafischen Elementes, eines Schriftzeichens oder einer Ziffer, etc. mit Druckfarbe aufzutragen und die das Element, das Schriftzeichen bzw. die Ziffer ergänzenden Teile registerhaltig in der Form eines transferierten Schichtverbundes 7 mit Beugungsstrukturen 8 auszubilden. Diese Kombination verschiedener Technologien ergibt ein hohes Mass an Sicherheit gegen Fälschungen und Manipulationen.

Zum zweiten ist es möglich, als Sicherheitselement einen Schichtverbund 7 vorzusehen, der ein vorbestimmtes Design von Elementen wie z.B. Linien, Pixeln, Punkten, Flächenelementen, etc. aufweist, die spezielle Beugungsstrukturen 8 enthalten, die in ihrem Zusammenspiel beispielsweise einen optischen Effekt erzeugen, wie sie von Produkten, die unter dem Markenamen KINEGRAM® vertrieben werden, bekannt sind. Das Erkennungssystem 14 ist nun, wie vorgängig beschrieben, eingerichtet, die Lage dieses Designs zu erkennen, so dass der Laserstrahl 12 genau über die Elemente dieses Designs geführt werden kann. Nach dem Abziehen der Trägerfolie bleibt dann dieses Design auf dem Substrat 9 zurück. Mit dieser Technologie lassen sich einerseits feine Details wie z.B. sehr schmale Linien aus dem Schichtverbund 7 auf das Substrat 9 übertragen. Andererseits ist ein Schichtverbund 7 mit einer stark reflektierenden Reflexionsschicht 4 verwendbar, was eine hohe Brillianz der übertragenen Beugungsstrukturen 8 gewährleistet. In der Regel ist nur ein Bruchteil der von einem optischen Sicherheitselement wie einem KINEGRAM® eingenommenen Fläche mit Beugungsstrukturen 8 versehen. Der Rest der Fläche ist beugungsoptisch nicht aktiv und kann insbesondere wie ein Spiegel wirken. Indem nur jene Teilflächen des Schichtverbundes 7, die Beugungsstrukturen 8 enthalten, auf das Substrat 9 übertragen werden, ist auch das Substrat 9 innerhalb der dem optischen Sicherheitselement zugeordneten Fläche nur teilweise bedeckt. Dank der stark reflektierenden Reflexionsschicht 4 erscheint das beugungsoptische Sicherheitselement dennoch in hoher Brillianz. Zugleich ist das darunterliegende Substrat 9 in den nicht bedeckten Teilflächen visuell zugänglich, wie wenn kein Sicherheitselement übertragen worden wäre. Auf dem Substrat 9 vorhandene Information oder eine Fotografie ist dann einerseits visuell und/oder maschinell lesbar und andererseits vor Veränderung durch das fein strukturiert übertragene Sicherheitselement geschützt.

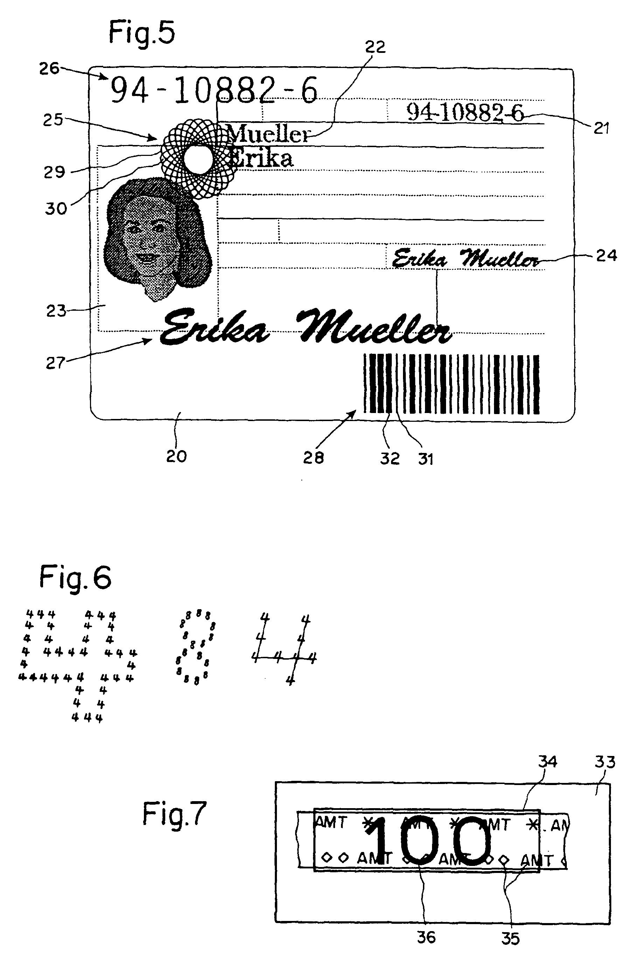

Die Fig. 5 zeigt zur näheren Illustration einen Ausweis 20, auf den eine Nummer 21 und der Namenszug 22 einer Person druckschriftlich aufgebracht ist. Der Ausweis 20 enthält ferner eine Fotografie 23 der Person und ist von der Person handschriftlich mit ihrer Unterschrift 24 versehen. Zum Schutz gegen Fälschungen oder Nachahmung ist der Ausweis mit vier Sicherheitselementen 25 bis 28 versehen, die als Schichtverbund 7 (Fig. 1) mit optischen Beugungsstrukturen 8 ausgebildet sind. In der Fig. 5 sind nur die Konturen der Sicherheitselemente 25 bis 28, nicht aber ihre optischen Effekte zu sehen. Das Sicherheitselement 25 besteht aus feinen Linien 29, die beispielsweise ein Guillochemuster bilden. Die Linien 29 überdecken Teile der Fotografie 23 und Teile des Namenzuges 22, während in den Zwischenräumen 30 die Fotografie 23 bzw. der Namenszug 22 nicht bedeckt und somit sichtbar sind. Das Sicherheitselement 25 dient zur Verhinderung des Auswechselns der Fotografie 23 und von Änderungen am Namenszug 22. Das Sicherheitselement 26 ist eine Nummer, die identisch mit der Nummer 21 ist. Die Konturen des Sicherheitselementes 27 stellen die Unterschrift 24 in vergrösserter Form dar. Auch die Nummer 21 und die Unterschrift 24 sind somit nicht mehr abänderbar, ohne dass dies bemerkt werden könnte. Das Sicherheitselement 28 schliesslich stellt einen der bekannten maschinenlesbaren Barcodes dar.

Form und Aussehen des Sicherheitselementes 25 sind unabhängig von den den Ausweis 20 individualisierenden Daten wie Namenszug 22, Nummer 21 oder anderen Daten wie Adresse, Staatszugehörigkeit, biometrischen Daten, etc.. Das Sicherheitselement 25 könnte deshalb auch ein aus der europäischen Patentschrift 401 466 bekannter vollflächig aufgeklebter Schichtverbund sein, der Linien 29 und durchsichtige Zwischenräume 30 umfasst. Mit der vorgängig beschriebenen Technik lassen sich jedoch einzelne der Linien 29 auch drucktechnisch aufbringen und die restlichen Linien aus einer als Schichtverbund 7 ausgebildeten Folie registergenau zu den gedruckten Linien hinzufügen. Die Form der Sicherheitselemente 26 bis 28 ist abhängig von Daten, die auch in anderer Form auf dem Ausweis 20 gespeichert sind. Die Sicherheitselemente 26, 27 und 28 sind z.B. aus einem Schichtverbund 7 (Fig. 1) durch Verkleben und anschliessendes Abziehen der Trägerfolie 1, 2 entstanden, wobei der Schichtverbund 7 Beugungsstrukturen 8 enthält, deren Reliefs über eine grössere Fläche quasi ortsunabhängige Beugungsstrukturen 8 aufweisen. Ein Beispiel einer gegen örtliche Translationen invarianten Beugungsstruktur 8 ist ein Gitter mit geraden Gitterfurchen. Beispiele von gegen örtliche Translationen quasi invarianten Beugungsstrukturen 8 sind gitterartige Strukturen, bei denen die Parameter Linienabstand, Orientierung und Profilform über eine Dimension der Grössenordnung der zu erreichenden Registergenauigkeit nur verhältnismässig wenig ändern. Ein Beispiel einer solchen Struktur ist ein Gitter mit gekrümmten Gitterfurchen, sofern die Krümmung über mehrere Gitterfurchen nur langsam ändert. Da der optische Effekt einer solchen Beugungsstruktur 8 unabhängig oder nur schwach abhängig von seiner xy-Lage ist, bewirken kleine Verschiebungen der Trägerfolie 1, 2 in der xy-Ebene gegenüber dem Substrat 9 kaum Veränderungen der optischen Effekte, die z.B. von den Ziffern des Sicherheitselementes 26 oder von der Unterschrift 27 zu erzeugen sind. Die Ziffern des Sicherheitselementes 26 sind somit ohne ersichtliche Beeinträchtigung ihrer optischen Wirkung auf einfache Weise auf dem Ausweis 20 erzeugbar, da bei quasi ortsinvarianter Ausgestaltung der Beugungsstrukturen 8 eine genaue gegenseitige Ausrichtung zwischen dem Ausweis 20 und dem das Sicherheitselement 26 erzeugenden Schichtverbund 7 nicht erforderlich ist.

Bei einer besonders fälschungssicheren Ausführung des Sicherheitselementes 26 ist, wie in der Fig. 6 an verschiedenen Beispielen gezeigt, jede Ziffer aus einer Mikroschrift gebildet, die die gleiche Ziffer mehrfach in verkleinerter Form enthält. So sind z.B. die Linien, die die Ziffer "4" bilden, nicht aus Punkten oder Strichen, sondern aus kleineren Ziffern "4" gebildet. Die Linien der Ziffer "8" sind aus kleinen Ziffern "8" gebildet. Jede Ziffer stellt somit ein Bild aus vielen kleinen Ziffern der gleichen Art dar. Dabei ist es bevorzugt, die kleinen Ziffern untereinander zu verbinden, damit auf dem Ausweis 20 ein zusammenhängender Schriftzug entsteht. Ein Laserstrahl 12 (Fig. 2) ist zu deren Herstellung besonders geeignet. Eine Fälschung, bei der aus der Ziffer "8" durch Entfernen des entsprechenden Teils der Ziffer "8" eine Ziffer "3" gemacht wurde, ist somit, wenn nicht unmittelbar vom unbewaffneten Auge, dann wenigstens mit Hilfsmitteln wie Lupen leicht erkennbar. Bei einer anderen Methode zum Übertragen der Nummer 26 ist ein auf einer Rolle aufgerolltes Band vorgesehen, das den Ziffern 0 1 2 ... 9 zugeordnete Flächen in wiederkehrender Folge enthält. Die einer bestimmten Ziffer zugeordnete Fläche enthält die Ziffer und/oder Text vorzugsweise in Mikroschrift in der Form eines quasi endlosen Musters. Weitere Teile dieser Flächen können zusätzliche visuell sichtbare oder maschinenlesbare Elemente enthalten. Beim Übertragen wird die Fläche der Ziffer beleuchtet und erwärmt. Innerhalb der Kontur der übertragenen Ziffer sind dann mehrfach die gleiche Ziffer und/ oder Text als beugungsoptisch aktive Elemente erkennbar.

Der spezielle Barcode 28 in der Fig. 5 ist aus schmalen und breiten Streifen 31 bzw. 32 gebildet, wobei jeder Streifen 31 eine binäre Zahl "0", jeder Streifen 32 eine binäre Zahl "1" darstellt. Die Streifen 31 und 32 enthalten Beugungsstrukturen 8, die das Licht eines in vorbestimmter Richtung auf sie auffallenden Leselichtstrahles eines Lesegerätes auf Photodetektoren beugen, die im Lesegerät entsprechend angeordnet sind. Bei Verwendung von spezifischen Beugungsstrukturen 8, z.B. einem Gitter mit einer asymmetrischen Profilform, ist es möglich, das Licht des Leselichtstrahles in Teilstrahlen mit vordefinierter Intensitätsverteilung zu beugen. Das Lesegerät ist mit Vorteil eingerichtet, das Verhältnis der von den Photodetektoren gemessenen unterschiedlichen Intensitäten zu analysieren. Auf diese Weise ist die Echtheit des Barcodes 28 aufgrund der spezifischen beugungsoptischen Eigenschaften der Beugungsstrukturen 8 überprüfbar. Der Barcode 28 kann weiter so ausgebildet sein, dass die Streifen 31, 32 dem unbewaffneten menschlichen Auge verborgen bleiben. Es sind auch Barcodes 28 herstellbar, deren Streifen 31, 32 z.B. entsprechend der Norm des MIL-STD-1189 oder nach dem "European Article Numbering Code" ausgebildet sind.

Es ist vorteilhaft, mit dem Laserstrahl 12 (Fig. 2) eine zusammenhängende Linie zu zeichnen, beispielsweise die Linien 29 des Guillochemusters oder den Schriftzug der Unterschrift des Sicherheitselementes 27.

Die Fig. 7 zeigt ein weiteres Anwendungsbeispiel. Ein Check oder Wertpapier 33 weist einen Streifen 34 auf, in den der Aussteller einen den Wert des Checks bzw. Wertpapiers 33 angebenden Geldbetrag 36 hineinschreiben soll. Um Fälschungen des Geldbetrages 36 zu verhindern, ist es vorgesehen, aus einer als Schichtverbund 7 (Fig. 1) ausgebildeten Folie mit vorbestimmten Mustern 35, welche bei Betrachtung und Bewegung des Musters 35 unter normalen Beleuchtungsverhältnissen vorbestimmte beugungsoptische Effekte erzeugen, Ziffern entsprechend dem Geldbetrag 36 zu übertragen, indem der Laserstrahl 12 (Fig. 2) die Ziffern schreibt oder indem das adressierbare Array 19 aus Laserdioden (Fig. 4) die Ziffern bildet, so dass nach dem Abziehen der Trägerfolie nur die Ziffern auf dem Check 33 zurückbleiben. Die in den Ziffern aufscheinenden Teile des Musters 35 stellen dank der Beugungsstrukturen 8 ein Sicherheitsmerkmal dar. Ein Hinzufügen neuer Ziffern oder Abändern bestehender Ziffern, ohne Spuren zu hinterlassen, ist somit ausgeschlossen.

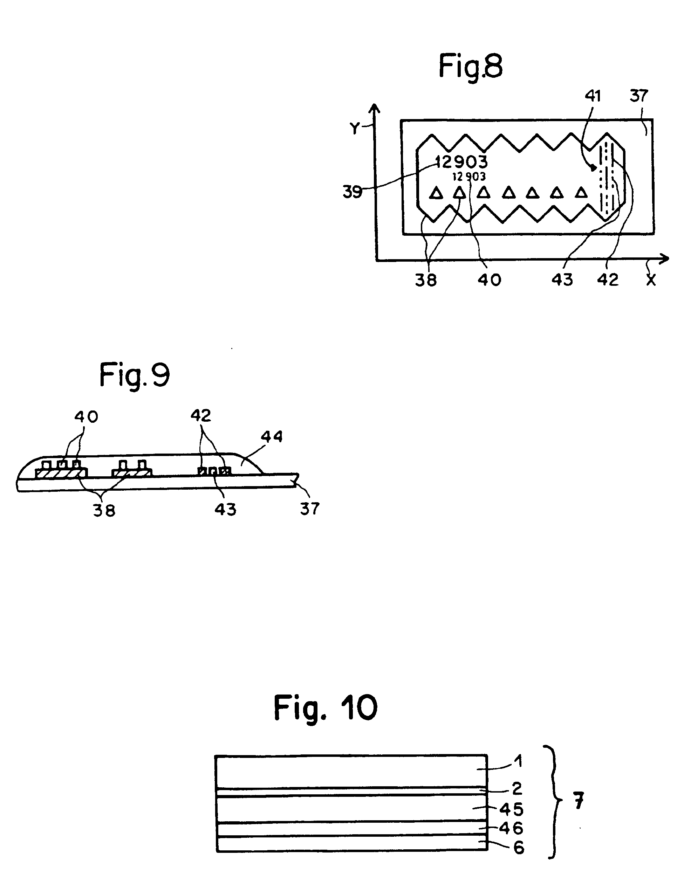

Das Verfahren mit dem gesteuerten Laserstrahl 12 eignet sich besonders zum registergenauen Aufbringen eines Sicherheitselementes auf ein gegen Fälschung zu schützendes Dokument, wie z.B. eine Banknote. Die Fig. 8 und 9 zeigen in der Draufsicht und im Querschnitt eine Banknote 37, die mit Mustern 38 und mit einer fortlaufenden Nummer 39 bedruckt ist und ein Sicherheitselement 40 aufweist, das die gleiche Nummer 39 darstellt. Weiter weist die Banknote Linien 41 auf, die aus Teillinien 42 und 43 einer ersten und einer zweiten Art zusammengesetzt sind. Die Teillinien 42 und 43 sind in der Fig. 8 ausgezogen bzw. gestrichelt gezeichnet. Bei der Produktion mit einer Einrichtung, wie sie in der Fig. 2 dargestellt ist, erfasst die Steuereinrichtung mittels des Erkennungssystems 14 die genaue xy-Lage der Banknote 37 und den Wert der Nummer 39. Das Sicherheitselement 40 wird aus einem Schichtverbund 7 (Fig. 1) mit optischen Beugungsstrukturen 8 erzeugt, indem die Steuereinrichtung den Laserstrahl 12 so steuert, dass die gelesene Nummer 39 nun registergenau durch lokales Verkleben des Schichtverbundes 7 mit der Banknote 37 und anschliessendem Abziehen der Trägerfolie 1, 2 (Fig. 1) entsteht. Die Ziffern und/oder Zeichen der Nummer 40 können gemäss einer der in der Fig. 6 gezeigten Variante ausgebildet sein.

Die Teillinien 42 sind z.B. in Tiefdrucktechnik mit einer vorbestimmten Druckfarbe hergestellte Linien, die Teillinien 43 sind ebenfalls mit einem der vorgängig beschriebenen Verfahren als Schichtverbund 7 mit Beugungsstrukturen 8 (Fig. 1) aufgebrachte Linien, die registergenau zu den Teillinien 42 hinzugefügt sind. Die Teillinien 43 bewirken wechselnde optische Effekte der weiter oben beschriebenen Art. Die aus den Teillinien 42 und 43 gebildeten Linien 41 können beliebige geometrische Muster darstellen. Dank der registergenauen gegenseitigen Ausrichtung bilden sie ein weiteres, leicht vom unbewaffneten Auge überprüfbares Sicherheitsmerkmal. Die Teillinien 42 können auch mit einem unsichtbaren Farbstoff oder einem fluoreszierenden Farbstoff aufgedruckt sein, so dass die Echtheit des Sicherheitsmerkmals nur mit entsprechenden Hilfsmitteln verifizierbar ist. Diese Kombination von Drucktechnik und beugungsoptischer Sicherheitstechnik eignet sich auch sehr gut zur Herstellung schwer fälschbarer Ziffern für die Nummer 40, indem jeweils die die einzelne Ziffer darstellende Linie oder Fläche alternierend aus Druckfarbe und einem Schichtverbund 7 besteht, wie die aus Teillinien 42 und 43 gebildeten Linien 41. Für einen Beobachter ist die Ziffer sowohl in den Teillinien 42 als auch in den Teillinien 43 gut erkennbar. Eine Veränderung des Wertes der Nummer 40 ist dadurch erschwert, dass die Information in zwei verschiedenen Techniken und registerhaltig geändert werden müsste. Die Registerhaltigkeit der beiden Realisierungen der Ziffern ist visuell ohne Hilfsmittel überprüfbar und bildet somit ein zusätzliches Sicherheitsmerkmal.

Es ist möglich, in einem weiteren Verfahrensschritt eine lokal begrenzte oder eine vollflächige, für sichtbares Licht durchsichtige Schutzschicht 44, z.B. aus einem UV-härtbaren Lack, aufzubringen, um die beugenden Linienelemente der Nummer 40 und der Linien 41 gegen mechanischen Abrieb zu schützen.

Anstelle eines Schichtverbundes 7 (Fig. 1), bei dem Beugungsstrukturen 8 beugungsoptische Effekte erzeugen, ist es auch möglich, einen Schichtverbund 7 mit Interferenzeffekte erzeugenden Schichten gemäss Fig. 10 so auszubilden, dass beim Kippen und/oder Drehen des Schichtverbundes unter normalen Beleuchtungsverhältnissen in vordefinierter Art und Weise wechselnde Farbeffekte auftreten.

In der Fig. 10 bedeutet 1 wiederum eine Trägerschicht, auf der in der angegebenen Reihenfolge eine Zwischenschicht 2, ein Paket von Schichten 45, fakultativ eine Lackschicht 46 und eine wärmeaktivierbare Kleberschicht 6 aufgebracht sind. Die Zwischenschicht 2 dient dazu, ein vorbestimmtes Haft- bzw. Ablöseverhalten zwischen der Trägerschicht 1 und dem Schichtpaket 45 zu erreichen. Die Lackschicht 46 dient gegebenenfalls zur Erhöhung der Haftung zwischen dem Schichtpaket 45 und der Kleberschicht 6. Zur Erzielung vordefinierter Interferenzeffekte ist das Schichtpaket 45 als eine Abfolge dünner Schichten aus dielektrischen und/oder absorbierenden Materialien, beispielsweise Metallen, ausgebildet, die im Zusammenspiel die optischen Interferenzeffekte erzeugen. Mögliche Effekte sind z.B. vordefinierte Farbänderungen beim Kippen des Schichtpaketes 45. Geeignete dielektrische Materialien sind in nicht abschliessender Aufzählung MgF, SiO₂, Al₂O₃, TiO₂ und ZnS. Typische Schichtdicken betragen 10 bis 200 Nanometer. Die Schichten des Schichtpaketes 45 können dabei zudem örtlich strukturiert sein.

Mittels der oben beschriebenen Verfahren können auf dem Substrat 9 örtlich strukturiert Interferenzeffekte erzeugende Schichten aufgebracht werden. Besonders vorteilhaft ist die Kombination von Schichtpaketen 45, die unterschiedliche Interferenzerscheinungen erzeugen. Verschiedene Farbänderungen sind als gegenseitige Referenzierung verwendbar, indem beispielsweise eine erste Teilfläche beim Kippen ihre Farbe von rot auf grün und eine benachbarte Fläche ihre Farbe von grün auf blau ändert. Insbesondere bei schlechten Beleuchtungsverhältnissen ist dann die Farbänderung der beiden Teilflächen besser erkennbar. Geometrische Muster mit vordefinierter lokaler Farbänderung beim Kippen lassen sich erzielen, indem verschiedene Schichtpakete 45 nacheinander, allenfalls registergenau, auf das Substrat 9 übertragen werden.

## Patentansprüche

1. Verfahren zur Übertragung eines Sicherheitselementes (25; 26; 27; 28) auf ein Substrat (9), wobei das Sicherheitselement (25; 26; 27; 28) als Schichtverbund (7) ausgebildet ist, der wenigstens eine Trägerfolie (1; 1,2) und eine thermisch aktivierbare Kleberschicht (6) zur Verbindung mit dem Substrat (9) aufweist und der optische Beugungsstrukturen (8) und/oder ein Schichtpaket (45) von Interferenzeffekte erzeugenden Schichten enthält, bei dem die Kleberschicht (6) mit dem Substrat (9) in Kontakt gebracht und durch den Schichtverbund (7) hindurch so erwärmt wird, daß der Schichtverbund (7) an den erwärmten Stellen auf dem Substrat (9) haftet und die Beugungsstrukturen (8) bzw. das Schichtpaket (45) nicht zerstört werden,
**dadurch gekennzeichnet,**
**daß** die Kleberschicht (6) durch Zufuhr von Strahlungsenergie in Form von Laserstrahlen (12) nur lokal als Linienmuster einer Linienbreite zwischen wenigen Mikrometern bis einigen zehn Mikrometern, z.B. 60 *µ*m, oder als Flächenelemente mit Abmessungen zwischen 10 und 100 Mikrometern erwärmt wird.

2. Verfahren zur Übertragung eines Sicherheitselementes (25; 26; 27; 28) auf ein Substrat (9), wobei das Sicherheitselement (25; 26; 27; 28) als Schichtverbund (7) ausgebildet ist, der wenigstens eine Trägerfolie (1; 1,2) und eine thermisch aktivierbare Kleberschicht (6) zur Verbindung mit dem Substrat (9) aufweist und der optische Beugungsstrukturen (8) und/oder ein Schichtpaket (45) von Interferenzeffekte erzeugenden Schichten enthält, bei dem die Kleberschicht (6) mit dem Substrat (9) in Kontakt gebracht und durch den Schichtverbund (7) hindurch so erwärmt wird, daß der Schichtverbund (7) an den erwärmten Stellen auf dem Substrat (9) haftet und die Beugungsstrukturen (8) bzw. das Schichtpaket (45) nicht zerstört werden,
**dadurch gekennzeichnet,**
**daß** die Kleberschicht (6) durch Zufuhr von Strahlungsenergie in Form von Belichten mit einem adressierbaren Array (19) aus Laser- oder Leuchtdioden nur lokal erwärmt wird.

3. Verfahren zur Übertragung eines Sicherheitselementes (25; 26; 27; 28) auf ein Substrat (9), wobei das Sicherheitselement (25; 26; 27; 28) als Schichtverbund (7) ausgebildet ist, der wenigstens eine Trägerfolie (1; 1,2) und eine thermisch aktivierbare Kleberschicht (6) zur Verbindung mit dem Substrat (9) aufweist und der optische Beugungsstrukturen (8) und/oder ein Schichtpaket (45) von Interferenzeffekte erzeugenden Schichten enthält, bei dem die Kleberschicht (6) mit dem Substrat (9) in Kontakt gebracht und durch den Schichtverbund (7) hindurch so erwärmt wird, daß der Schichtverbund (7) an den erwärmten Stellen auf dem Substrat (9) haftet und die Beugungsstrukturen (8) bzw. das Schichtpaket (45) nicht zerstört werden,
**dadurch gekennzeichnet,**
**daß** die Kleberschicht (6) durch Zufuhr von Strahlungsenergie durch eine Maske (17) oder mittels eines räumlichen Lichtmodulators, der eine Matrix aus adressierbaren Pixeln aufweist, nur lokal in vielen Flächenteilen des Schichtverbundes (7) gleichzeitig erwärmt wird.

4. Verfahren nach einem der vorhergehenden Ansprüche,
**dadurch gekennzeichnet,**
**daß** die Trägerfolie (1; 1, 2) nach dem Verkleben der Kleberschicht (6) mit dem Substrat (9) abgezogen wird, wobei sich die Trägerfolie (1; 1, 2) an den auf dem Substrat (9) haftenden Stellen von den restlichen Schichten (3, 4, 5, 6; 45, 46, 6) des Schichtverbundes (7) löst und wobei diese Schichten (3, 4, 5, 6; 45, 46, 6) entlang der Grenze zwischen den haftenden und den nicht haftenden Stellen reissen, so daß diese Schichten (3, 4, 5, 6; 45, 46, 6) nur an den haftenden Stellen auf dem Substrat (9) zurückbleiben.

5. Verfahren nach Anspruch 1 und 4,
**dadurch gekennzeichnet,**
**daß** die xy-Lage des Substrates (9) mittels eines Erkennungssystems (14) erfaßt wird und daß die Position des Laserstrahles (12) beim Übertragen des Schichtverbundes (7) auf xy-Lage des Schichtverbundes (7) ausgerichtet wird.

6. Verfahren nach Anspruch 1 und 4,
**dadurch gekennzeichnet,**
**daß** der Schichtverbund (7) mit Beugungsstrukturen (8) versehene Teilflächen aufweist, daß die xy-Lage des Schichtverbundes (7) mittels eines Erkennungssystems (14) erfaßt wird und daß die Position des Laserstrahles (12) beim Übertragen des Schichtverbundes (7) auf die xy-Lage des Schichtverbundes (7) ausgerichtet wird.

7. Verfahren nach Anspruch 1, 5 und 6,
**dadurch gekennzeichnet,**
**daß** die xy-Lage des Substrates (9) und die xy-Lage des Schichtverbundes (7) mittels eines Positionierungssystems (50) aufeinander ausgerichtet werden.

8. Verfahren nach einem der Ansprüche 4-7,
**dadurch gekennzeichnet,**
**daß** das Substrat (9) zum Schutz der lokal zurückgebliebenen Schichten (3, 4, 5, 6; 45, 46, 6) des Schichtverbundes (7) gegen mechanischen Abrieb oder Veränderung mit einer Schutzschicht (44) überzogen wird.

9. Verfahren nach einem der Ansprüche 4-8,
**dadurch gekennzeichnet,**
**daß** das Sicherheitselement (27) Schriftzeichen, insbesondere Ziffern, umfaßt, und daß die von einem einzelnen Schriftzeichen eingenommene Fläche viele kleine Schriftzeichen der gleichen Art enthält.

10. Verfahren nach einem der Ansprüche 4-9,
**dadurch gekennzeichnet,**
**daß** das Substrat (9) ein Dokument, insbesondere eine Banknote, ist, das Muster oder Schriftzeichen, insbesondere Ziffern, erhält, die aus Teillinien (42, 43) einer ersten und einer zweiten Art zusammengesetzt sind, wobei die Teillinien (42) der ersten Art aus Druckfarbe bestehen und die Teillinien (43) der zweiten Art als Schichtverbund (7) mit Beugungsstrukturen (8) oder mit Interferenzeffekte erzeugenden Schichten (45) ausgebildet sind, und daß die Teillinien (42, 43) der ersten und zweiten Art registergenau aufeinander ausgerichtet werden.

11. Verfahren nach einem der Ansprüche 4-10 für ein Substrat (9), das ein Check (33) oder ein Wertpapier ist, dessen Wert durch die Angabe eines Geldbetrages(36) festgehalten ist,
**dadurch gekennzeichnet,**
**daß** die den Geldbetrag (36) darstellenden Ziffern als Sicherheitselement (27) übertragen werden.

## Claims

1. A method of transferring a security element (25; 26; 27; 28) onto a substrate (9), wherein the security element (25; 26; 27; 28) is in the form of a composite laminate (7) which includes at least one carrier foil (1, 1, 2) and a thermally activatable adhesive layer (6) for connection to the substrate (9) and which includes optical diffraction structures (8) and/or a layer pack (45) of layers producing interference effects, whereby the adhesive layer (6) is brought into contact with the substrate (9) and locally heated through the laminate (7) so that the laminate (7) adheres to the substrate (9) at the heated locations and without the diffraction structures (8) or the layer pack (45) being destroyed,
**characterized in that**
the adhesive layer (6) is heated by supply of radiant energy in form of laser beams (12), only locally as a pattern of lines comprising a width of the lines between a few micrometers and a few 10 micrometers, such as 60 *µ*m, or as elements and portions, resp., covering an area or surface, resp., comprising dimensions between 10 and 100 micrometers.

2. A method of transferring a security element (25; 26; 27; 28) onto a substrate (9), wherein the security element (25; 26; 27; 28) is in the form of a composite laminate (7) which includes at least one carrier foil (1; 1, 2) and a thermally activatable adhesive layer (6) for connection to the substrate (9) and which includes optical diffraction structures (8) and/or a layer pack (45) of layers producing interference effects, whereby the adhesive layer (6) is brought into contact with the substrate (9) and locally heated through the laminate (7) so that the laminate (7) adheres to the substrate (9) at the heated locations and without the diffraction structures (8) or the layer pack (45) being destroyed,
**characterized in that**
the adhesive layer (6) is heated, by supply of radiant energy by exposure with an addressable array (19) of laser or light emitting diodes, only locally.

3. A method of transferring a security element (25; 26; 27; 28) onto a substrate (9), wherein the security element (25; 26; 27; 28) is in the form of a composite laminate (7) which includes at least one carrier foil (1; 1, 2) and a thermally activatable adhesive layer (6) for connection to the substrate (9) and which includes optical diffraction structures (8) and/or a layer pack (45) of layers producing interference effects, whereby the adhesive layer (6) is brought into contact with the substrate (9) and locally heated through the laminate (7) so that the laminate (7) adheres to the substrate (9) at the heated locations and without the diffraction structures (8) or the layer pack (45) being destroyed,
**characterized in that**
the adhesive layer (6) is heated, by supply of radiant energy through a mask (17) or by means of a spatial light modulator comprising a matrix of addressable pixels, only locally in many surface portions, areal parts and locations, resp., of said laminate (7) at the same time.

4. A method according to one of the preceding claims,
**characterized in that**
after the operation of gluing the adhesive layer (6) to the substrate (9) the carrier foil (1; 1, 2) is pulled off, wherein at the locations adhering to the substrate (9) the carrier foil (1; 1, 2) is detached from the remaining layers (3, 4, 5, 6; 45, 46, 6) of the laminate (7) and wherein said layers (3, 4, 5, 6; 45, 46, 6) tear along the boundary between the adhering and the non-adhering locations so that said layers (3, 4, 5, 6; 45, 46, 6) remain behind on the substrate (9) only at the adhering locations.

5. A method according to claims 1 and 4,
**characterized in that**
the xy-position of the substrate (9) is detected by means of a detection system (14) and that the position of the laser beam (12) is aligned with the xy-position of the substrate (9) when transferring the laminate (7).

6. A method according to claims 1 and 4,
**characterized in that**
the laminate (7) has surface portions provided with diffraction structures (8), that the xy-position of the laminate (7) is detected by means of a detection system (14) and that the position of the laser beam (12) is aligned with the xy-position of the laminate (7) when transferring the laminate (7).

7. A method according to claims 1, 5 and 6,
**characterized in that**
the xy-position of the substrate (9) and the xy-position of the laminate (7) are aligned with each other by means of a positioning system (50).

8. A method according to one of claims 4 to 7,
**characterized in that**
to protect the layers (3, 4, 5, 6; 45, 46, 6), which have locally remained, of the laminate (7) from mechanical abrasion or alteration the substrate (9) is covered with a protective layer (41).

9. A method according to one of claims 4 to 8,
**characterized in that**
the security element (27) includes characters, in particular digits, and that the surface and area, resp., occupied by an individual character contains many small characters of the same kind.

10. A method according to one of claims 4 to 9,
**characterized in that**
the substrate (9) is a document, in particular a banknote, that the document receives patterns or characters, in particular digits, which are composed of line portions (42, 43) of first and second kinds, that the line portions (42) of the first kind comprise printing ink and that the line portions (43) of the second kind are in the form of a laminate (7) with diffraction structures (8) or with layers (45) producing interference effects, and that the line portions (42, 43) of the first and second kinds are oriented in accurate register relationship with each other.

11. A method according to one of claims 4 to 10 for a substrate (9) which is a check (33) or a value-bearing paper whose value is fixed by specifying an amount of money (36),
**characterized in that**
the digits representing the amount of money (36) are transferred as a security element (27).

## Revendications

1. Procédé à appliquer un élément de sécurité (25; 26; 27; 28) sur un substrat (9), dans lequel l'élément de sécurité (25; 26; 27; 28) est configuré comme un composite multicouche (7) qui comprend au moins un film support (1; 1, 2) et une couche d'adhésif ((6) apte à être activée de manière thermique pour la liaison avec ledit substrat (9) et qui comprend des structures (8) de diffraction optique et/ou un paquet stratifié (45) à couches produisant des effets d'interférence, dans lequel ladite couche d'adhésif (6) est mise en contact avec ledit substrat (9) et chauffée à travers ledit composite multicouche (7) de façon, que ledit composite multicouche (7) adhère sur ledit substrat (9) au niveau des endroits chauffés, sans que lesdites structures de diffraction (8) ou respectivement ledit paquet stratifié (45) soient détruits,
**caractérisé en ce**
**que** ladite couche d'adhésif (6) n'est chauffée, par amenée de l'énergie rayonnante sous forme de rayons laser (12), que localement sous forme d'un motif à lignes à une largeur de ligne entre quelques micromètres et quelques dizaines de micromètres, par exemple 60 µm, ou en tant qu'un élément plan aux dimensions entre 10 et 100 micromètres.

2. Procédé à appliquer un élément de sécurité (25; 26; 27; 28) sur un substrat (9), dans lequel l'élément de sécurité (25; 26; 27; 28) est configuré comme un composite multicouche (7) qui comprend au moins un film support (1; 1, 2) et une couche d'adhésif ((6) apte à être activée de manière thermique pour la liaison avec ledit substrat (9) et qui comprend des structures (8) de diffraction optique et/ou un paquet stratifié (45) à couches produisant des effets d'interférence, dans lequel ladite couche d'adhésif (6) est mise en contact avec ledit substrat (9) et chauffée à travers ledit composite multicouche (7) de façon, que ledit composite multicouche (7) adhère sur ledit substrat (9) au niveau des endroits chauffés, sans que lesdites structures de diffraction (8) ou respectivement ledit paquet stratifié (45) soient détruits,
**caractérisé en ce**
**que** ladite couche d'adhésif (6) n'est chauffée que localement par amenée de l'énergie rayonnante sous forme d'exposition à un système (19) adressable constitué de diodes laser ou de diodes lumineuses.

3. Procédé à appliquer un élément de sécurité (25; 26; 27; 28) sur un substrat (9), dans lequel l'élément de sécurité (25; 26; 27; 28) est configuré comme un composite multicouche (7) qui comprend au moins un film support (1; 1, 2) et une couche d'adhésif ((6) apte à être activée de manière thermique pour la liaison avec ledit substrat (9) et qui comprend des structures (8) de diffraction optique et/ou un paquet stratifié (45) à couches produisant des effets d'interférence, dans lequel ladite couche d'adhésif (6) est mise en contact avec ledit substrat (9) et chauffée à travers ledit composite multicouche (7) de façon, que ledit composite multicouche (7) adhère sur ledit substrat (9) au niveau des endroits chauffés, sans que lesdites structures de diffraction (8) ou respectivement ledit paquet stratifié (45) soient détruits,
**caractérisé en ce**
**que** ladite couche d'adhésif (6) n'est chauffée, par amenée de l'énergie rayonnante à travers un masque (17) ou au moyen d'un modulateur de lumière tridimensionnelle, qui comprend une matrice à éléments d'image adressables, que localement en un grand nombre de surfaces partielles dudit composite multicouche (7) en même temps.

4. Procédé selon une quelconque des revendications précédentes,
**caractérisé en ce**
**que** ledit film support (1; 1, 2) est décalqué, après collage de ladite couche d'adhésif (6) sur ledit substrat (9), ledit film support (1; 1, 2) se détachant des autres couches (3, 4, 5, 6; 45, 46, 6) dudit composite multicouche (7) au niveau des endroits adhérant sur ledit substrat (9), et lesdites couches (3, 4, 5, 6; 45, 46, 6) se déchirant le long de la limite entre les endroits adhérant et les endroits non adhérant, de sorte que ces couches (3, 4, 5, 6; 45, 46, 6) ne restent sur ledit substrat (9) qu'au niveau des endroits adhérent.

5. Procédé selon les revendications 1 et 4,
**caractérisé en ce**
**que** la position xy dudit substrat (9) est détectée au moyen d'un système de reconnaissance (14), et en ce que la position dudit rayon laser (12) est alignée sur la position xy dudit composite multicouche (7) lors de l'application dudit composite multicouche (7).

6. Procédé selon les revendications 1 et 4,
**caractérisé en ce**
**que** ledit composite multicouche (7) comprend des surfaces partielles dotées de structures de diffraction (8), en ce que la position xy dudit composite multicouche (7) est détectée au moyen d'un système de reconnaissance (14), et en ce que la position dudit rayon laser (12) est alignée sur la position xy dudit composite multicouche (7) lors de l'application dudit composite multicouche (7).

7. Procédé selon les revendications 1, 5 et 6,
**caractérisé en ce**
**que** la position xy dudit substrat (9) et la position xy dudit composite multicouche (7) sont alignées l'une sur l'autre au moyen d'un système de positionnement (50).

8. Procédé selon une quelconque des revendications 4 à 7,
**caractérisé en ce**
**que** ledit substrat (9) est recouvert d'une couche de protection (44) pour la protection des couches localement restées (3, 4, 5, 6; 45, 46, 6) dudit composite multicouche (7) contre l'usure mécanique par frottement ou contre toute modification.

9. Procédé selon une quelconque des revendications 4 à 8,
**caractérisé en ce**
**que** l'élément de sécurité (27) comprend des caractères, en particulier des chiffres, et en ce que l'aire occupée par un seul caractère contient de nombreux petits caractères de la même nature.

10. Procédé selon une quelconque des revendications 4 à 9,
**caractérisé en ce**
**que** ledit substrat (9) est un document, en particulier un billet de banque, qui contient des motifs ou des caractères, en particulier des chiffres, qui sont composés de lignes partielles (42, 43) d'un premier type et d'un deuxième type, lesdites lignes partielles (42) dudit premier type étant composée d'encre d'imprimerie et lesdites lignes partielles (43) dudit deuxième type étant configurée aux structures de diffraction (8) ou aux couches (45) produisant des effets d'interférence, et en ce que lesdites lignes partielles (42, 43) dudit premier type et dudit deuxième type sont alignées l'une sur l'autre à une précision de repérage point sur point.

11. Procédé selon une quelconque des revendications 4 à 10 pour un substrat (9), qui est un chèque (33) ou un titre, dont la valeur est fixée par l'indication d'une somme d'argent (36),
**caractérisé en ce**
**que** les chiffres représentant ladite somme d'argent (36) sont transfert comme élément de sécurité (27).
